## Europäisches Patentamt
## European Patent Office
## Office européen des brevets

(19)

(11) Veröffentlichungsnummer: **0 016 342**
**B1**

(12) ## EUROPÄISCHE PATENTSCHRIFT

(45) Veröffentlichungstag der Patentschrift:
12.01.83

(51) Int. Cl.³: **B 23 F 23/11**

(21) Anmeldenummer: **80100801.2**

(22) Anmeldetag: **18.02.80**

(54) Abrichtgerät für eine tellerförmige Schleifscheibe an einer Zahnflankenschleifmaschine.

(30) Priorität: **17.03.79 CH 2503/79**

(43) Veröffentlichungstag der Anmeldung:
**01.10.80 Patentblatt 80/20**

(45) Bekanntmachung des Hinweises auf die Patenterteilung:
**12.01.83 Patentblatt 83/2**

(84) Benannte Vertragsstaaten:
**DE FR GB IT**

(56) Entgegenhaltungen:
**CH-A-236 447**
**DE-A-2 641 554**
**DE-A-2 644 890**
**DE-B-1 627 374**
**DE-C-729 464**
**US-A-2 652 661**
**US-A-3 517 659**

**MAAG-TASCHENBUCH 1963, MAAG-ZAHNRÄDER
AG, Zürich, Seiten 258 bis 268**

(73) Patentinhaber: **Maag-Zahnräder und -Maschinen
Aktiengesellschaft, Hardstrasse 219, CH-8023 Zürich
(CH)**

(72) Erfinder: **Bickel, Hansjörg,
Generalwerdmüllerstrasse 14, CH-8804 Au (CH)**

(74) Vertreter: **Hotz, Klaus, Dipl.-El.-Ing. / ETH et al, c/o
Maag-Zahnräder und -Maschinen Aktiengesellschaft
Hardstrasse 219, CH-8023 Zürich (CH)**

# Abrichtgerät für eine tellerförmige Schleifscheibe an einer Zahnflankenschleifmaschine

Die Erfindung betrifft ein Abrichtgerät für eine tellerförmige Schleifscheibe an einer Zahnflankenschleifmaschine mit einem Abrichtschlitten, der mittels eines Radialantriebs in Bezug auf die Schleifscheibe radial zustellbar ist und ein Abrichtwerkzeug zum Abrichten der Mantelfläche der Schleifscheibe sowie einen Taster zum Abtasten der arbeitenden Stirnfläche der Schleifscheibe und zum Steuern von deren axialer Zustellbewegung trägt, welcher Taster sich beim Zustellen des Abrichtschlittens stets radial zur Schleifscheibe bewegt.

Bei einem bekannten Abrichtgerät dieser Gattung (DE-A 26 44 890) ist das Abrichtwerkzeug eine mit ihrer Stirnseite arbeitende, rotierende Abrichtscheibe, die am Abrichtschlitten derart gelagert ist, dass ihre Drehachse sich radial zur Schleifscheibe erstreckt und mit der Richtung übereinstimmt, in welcher der Abrichtschlitten durch den Radialantrieb zustellbar ist. Der (in der DE-A 26 44 890 nicht dargestellte) Taster zum Steuern der axialen Zustellung der Schleifscheibe ist am Abrichtschlitten derart befestigt, dass er die Stirnfläche der Schleifscheibe unmittelbar radial innerhalb der Arbeitsstelle des Abrichtwerkzeugs abtastet. Diese Anordnung hat sich für Schleifverfahren wie das 0°-Schleifverfahren (MAAG-Taschenbuch, Zürich 1963, Seiten 259 ff) bewährt, bei denen zwei parallel zueinander angeordnete Schleifscheiben gleichzeitig an je einer Zahnflanke angreifen und dabei nur mit einem kleinen äusseren Randbereich ihrer freien Stirnfläche arbeiten. Will man bei solchen Schleifverfahren hohe Massgenauigkeit und Oberflächengüte erzielen, so muss die arbeitende Stirnfläche der bzw. jeder Schleifscheibe in kurzen Zeitintervallen durch einen Taster kontrolliert und je nach Vergabe in einer Steuervorrichtung axial nachgestellt und eventuell abgerichtet werden und ferner muss die Mantelfläche der Schleifscheibe in bestimmten Intervallen überarbeitet werden, damit sie mit der Stirnfläche eine scharfe Kante bildet und stets gerade so breit bleibt, dass ein Ausbröckeln der Schleifscheibe an ihrem Rand vermieden wird.

Es sind indessen auch Schleifverfahren bekannt, bei denen ein scharfkantiger Schleifscheibenrand nicht erforderlich und in Hinblick auf sparsame Nutzung der Schleifscheibe nicht einmal wünschenswert ist. Dennoch muss auch bei solchen Schleifverfahren die bzw. jede Schleifscheibe in bestimmten Zeitintervallen an ihrer Stirnfläche und, in meist grösseren Zeitintervallen auch an ihrer abgerundeten Mantelfläche abgerichtet werden. Für das Abrichten der Mantelfläche wird vorzugsweise ein Abrichtwerkzeug in Gestalt einer Rolle verwendet, deren Drehachse parallel zu derjenigen der Schleifscheibe angeordnet ist und deren Mantelflächenprofil zu demjenigen der Schleifscheibe komplementär ist. Bei Verwendung eines solchen oder anderen zum Abrichten eines abgerundeten Schleifscheibenrandes geeigneten Abrichtwerkzeugs ist es schwierig, den Taster zum Steuern der axialen Zustellbewegungen der Schleifscheibe derart am Abrichtschlitten zu befestigen, dass er unmittelbar radial innerhalb des den Schleifscheibenrand abrichtenden Abrichtwerkzeuges die schmale ringförmige Stirnfläche der Schleifscheibe abtastet. Es wäre zwar denkbar, diesen Taster auf einem gesonderten, vom Abrichtschlitten unabhängigen Tasterschlitten anzuordnen, der synchron mit dem Abrichtschlitten unter einem bestimmten Winkel zu diesem radial in Bezug auf die Schleifscheibe zustellbar ist, doch würde dies einen grossen Aufwand bedeuten, zumal die Bewegungen des Abrichtwerkzeugs und des Tasters sehr genau aufeinander abgestimmt sein müssen, damit die Schleifscheibe stets genau die erforderliche Form und Stellung in Bezug auf die zu schleifende Zahnflanke erhält und dementsprechend die gewünschte Arbeitsgenauigkeit erzielen kann.

Der Erfindung liegt deshalb die Aufgabe zugrunde, bei einem Abrichtgerät der eingangs beschriebenen Gattung ausreichenden Arbeitsraum für ein zum Abrichten eines runden Schleifscheibenrandes geeigneten Abrichtwerkzeugs zu schaffen und dennoch die erforderliche Abstimmung zwischen den Bewegungen des Tasters und des Abrichtwerkzeugs auf einfache Weise aufrechtzuerhalten.

Die Aufgabe ist erfindungsgemäss dadurch gelöst, dass das Abrichtwerkzeug in Bezug auf den Taster in Umfangsrichtung der Schleifscheibe versetzt auf einem Werkzeugträger angeordnet ist, der am Abrichtschlitten parallel zur arbeitenden Stirnfläche der Schleifscheibe verstellbar angeordnet und von einem Zusatzantrieb gesteuert ist, der mit dem Radialantrieb verbunden ist.

Das Abrichtwerkzeug nimmt somit ebenso wie der Taster an den radialen Zustellbewegungen des Abrichtschlittens teil. Wegen der Versetzung des Abrichtwerkzeugs in Bezug auf den Taster bedeutet jedoch jede Zustellbewegung des Abrichtschlittens eine Bewegung des Abrichtwerkzeugs auf einer Bewegungsbahn, die mit der radialen Bewegungsbahn des Tasters nicht übereinstimmt. Der zusätzliche Antrieb sorgt dafür, dass das Abrichtwerkzeug trotz seiner abweichenden Bewegungsbahn unabhängig vom Abnutzungszustand der Schleifscheibe stets in der gewünschten Weise an deren Mantelfläche angreift.

Bei einer wegen ihrer Einfachheit bevorzugten Ausführungsform der Erfindung ist der Werkzeugträger eine auf dem Abrichtschlitten schwenkbar gelagerte Wippe. Der Werkzeugträger könnte aber auch verschiebbar auf dem Abrichtschlitten geführt sein.

Wenn der Radialantrieb für den Abrichtschlitten eine Gewindespindel aufweist, wie dies bei dem eingangs beschriebenen bekannten Abrichtgerät der Fall ist, dann weist der Zusatzantrieb zweckmässigerweise ebenfalls eine am Abrichtschlitten gelagerte, zusätzliche Gewindespindel auf, die mit der Gewindespindel des Radialantriebs gekuppelt ist, beispielsweise über eine Biegewelle.

Gemäss einer Weiterbildung der Erfindung ist die zusätzliche Gewindespindel zu gemeinsamer Axialverschiebung mit einem Kolben verbunden, der in einem am Abrichtschlitten ausgebildeten Zylinder in Längsrichtung der zusätzlichen Gewindespindel verschiebbar angeordnet ist. Dadurch wird die Möglichkeit geschaffen, das Abrichtwerkzeug durch Drehen der Gewindespindel in eine dem jeweiligen Schleifscheibendurchmesser angepasste Grundstellung zu bringen, in der es einen bestimmten Abstand von der Mantelfläche der Schleifscheibe hat, und aus der es auf ein Signal hin durch Verschieben des Kolbens mit der Schleifscheibe in Eingriff gebracht werden kann.

Der Zusatzantrieb ist besonders einfach, wenn gemäss einem weiteren Merkmal der Erfindung die zusätzliche Gewindespindel gemeinsam mit der Gewindespindel des Radialantriebs über eine Klinke von einem Kolben in einem Zylinder antreibbar ist, der gemeinsam mit dem am Abrichtschlitten ausgebildeten Zylinder über ein Ventil an eine Druckmittelquelle angeschlossen ist.

Die zusätzliche Gewindespindel könnte mit dem Werkzeugträger unmittelbar in Gewindeeingriff stehen, besonders wenn dieser linear verschiebbar ist. Vor allem für die Ausführungsform der Erfindung, bei welcher der Werkzeugträger eine Wippe ist, hat sich indessen die Weiterbildung bewährt, dass die zusätzliche Gewindespindel mit einer Schablone in Eingriff steht, die am Abrichtschlitten verschiebbar geführt ist und den Werkzeugträger abstützt. Durch entsprechende Gestaltung der Schablone kann die Zusatzbewegung des Werkzeugträgers jede gewünschte, auf die radiale Zustellbewegung des Abrichtschlittens abgestimmte Charakteristik erhalten.

Bei dem erfindugsgemässen Abrichtgerät kann wie bei dem eingangs beschriebenen bekannten Abrichtgerät der Abrichtschlitten an einem Schleifsupport geführt sein, der die Schleifscheibe trägt und seinerseits an einem Träger geführt ist. Diese Gestaltung lässt sich erfindungsgemäss dadurch weiterbilden, dass am Schleifsupport ein Ritzel gelagert ist, das mit zwei einander gegenüberliegenden Zahnstangen in Eingriff steht, von denen die eine am Träger und die andere am Abrichtschlitten ausgebildet oder befestigt ist.

Ein Ausführungsbeispiel der Erfindung wird im folgenden anhand schematischer Zeichnungen erläutert. Es zeigt:

Fig. 1 ein erfindungsgemässes Abrichtgerät an einer Zahnflankenschleifmaschine, teilweise im Schnitt dargestellt,

Fig. 2 das Abrichtgerät gemäss Fig. 1 in einer Grundstellung

Fig. 3 dasselbe Abrichtgerät beim Abrichten einer nahezu neuen Schleifscheibe mit entsprechend grossem Durchmesser

Fig. 4 dasselbe Abrichtgerät beim Abrichten einer nahezu verbrauchten Schleifscheibe mit entsprechend kleinem Durchmesser, und

Fig. 5 die geometrischen Beziehungen zwischen Schleifscheibe, Abrichtwerkzeug und Taster.

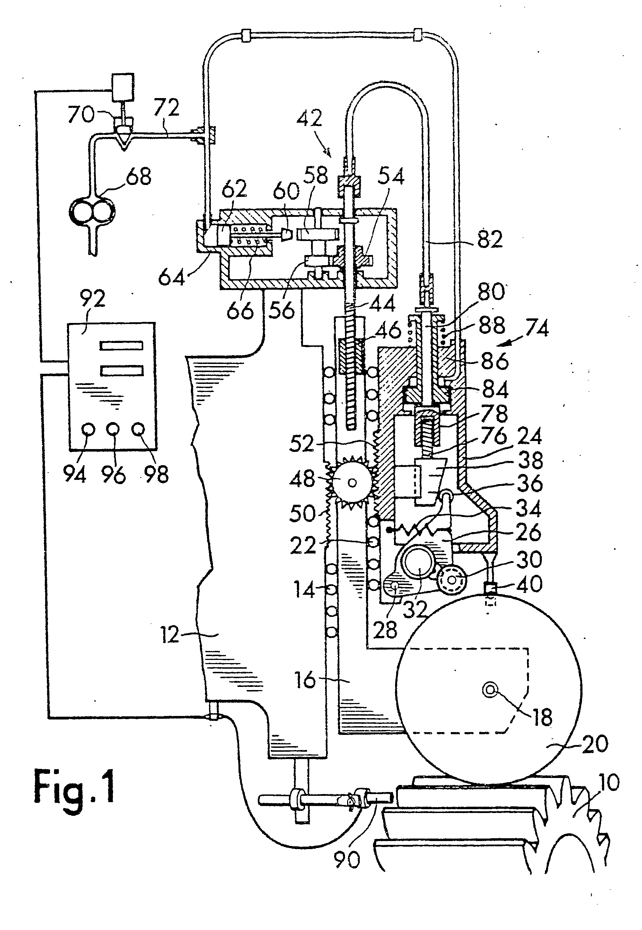

Das dargestellte Abrichtgerät ist Bestandteil oder Zubehör einer Zahnflankenschleifmaschine, die beispielsweise gemäss Fig. 1 an einem Zahnrad 10, dargestellt ist ein geradverzahntes Stirnrad, Zahnflanken von evolventenförmigem Profil schleift. Zu der Maschine gehört ein im Bezug auf das Zahnrad 10 in Längsrichtung von dessen Zähnen hin- und herbeweglicher Träger 12, wobei es nicht darauf ankommt, ob diese Bewegung vom Zahnrad 10 oder vom Träger 12 ausgeführt wird. Ebensowenig kommt es im vorliegenden Zusammenhang darauf an, wie die Komponenten der zum Erzeugen des Evolventenprofils erforderlichen Abwälzbewegung auf das Zahnrad 10 und den Träger 12 aufgeteilt sind.

Der Träger 12 weist eine Rollenführung 14 auf, die einen in Bezug auf das Zahnrad 10 radial auf- und abbbeweglichen Schleifsupport 16 führt. Am Schleifsupport 16 ist eine Schleifspindel 18 samt daran befestigter tellerförmiger Schleifscheibe 20 drehbar gelagert und axial zustellbar geführt. Lagerung und Antrieb für die axiale Zustellung der Schleitspindel 18 samt Schleifscheibe 20 können in bekannter Weise, z.B. gemäss DE-A 26 44 890 ausgeführt sein und sind deshalb hier nicht dargestellt.

Am Schleifsupport 16 ist eine weitere Rollenführung 22 ausgebildet, an der parallel zur Bewegungsrichtung des Schleifsupports, also ebenfalls radial in Bezug auf das Zahnrad 10, ein Abrichtschlitten 24 auf- und abbeweglich geführt ist. Am Abrichtschlitten 24 ist ein Werkzeugträger 26 in Gestalt einer Wippe auf einer Schwenkachse 28 gelagert, die sich parallel zur Schleifspindel 18 erstreckt. Auf dem Werkzeugträger 26 ist ein Abrichtwerkzeug 30 in Gestalt einer mit Diamanten besetzten Rolle gelagert, deren Drehachse zur Schwenkachse 28 parallel ist und deren Mantelfläche im Profil konkav ist. Zum Antreiben dieses rollenförmigen Abrichtwerkzeugs 30 ist, ebenfalls auf dem Werkzeugträger 26, ein Motor 32 angeordnet.

Der Werkzeugträger 26 ist durch eine Rückstellfeder 34 derart vorgespannt, dass er sich mit einer an ihm gelagerten Rolle 36 an einer Schablone 38 abstützt, die am Abrichtschlitten 24 senkrecht verschiebbar geführt ist. Die Schwenkachse 28 und die Rolle 36 sind in Bezug auf das Abrichtwerkzeug 30 derart angeordnet und die Schablone 38 ist derart keilförmig gestaltet, dass eine nach unten gerichtete Verschiebung der Schablone 38 in Bezug auf den Abrichtschlitten 24 eine dem Uhrzeigersinn entsprechende Schwenkung des Werkzeugträgers 26 bewirkt, durch die das Abrichtwerkzeug 30 mit der Mantelfläche der Schleifscheibe 20 in Eingriff kommt.

Am Abrichtschlitten 24 ist ferner ein Taster 40 befestigt, und zwar derart, dass er sich genau längs des senkrechten Durchmessers der Schleifscheibe 20 bewegt, wenn der Abrichtschlitten 24 in seiner Rollenführung 22 in Bezug auf den Schleifsupport 16 senkrecht auf- oder abwärts bewegt wird.

Dem Schleifsupport 16 und dem Abrichtschlitten 24 ist für ihre Verstellung in der Senkrechten ein gemeinsamer Radialantrieb 42 zugeordnet. Dazu gehört eine am Träger 12 drehbar, jedoch axial unverschiebbar gelagerte Gewindespindel 44, die mit einer am Schleifsupport 16 befestigten Mutter 46 in Gewindeeingriff steht. Zum Radialantrieb 42 gehört ferner ein am Schleifsupport 16 gelagertes Ritzel 48, das gleichzeitig mit zwei einander gegenüberliegenden Zahnstangen 50 und 52 kämmt, von denen die erste am Träger 12 und die zweite am Abrichtschlitten 24 ausgebildet oder befestigt ist.

An der Gewindespindel 44 ist ein Zahnrad 54 befestigt, das mit einem Ritzel 56 kämmt; das Ritzel 56 ist an einem Klinkenrad 58 befestigt und gemeinsam mit diesem am Träger 12 drehbar gelagert. Dem Klinkenrad 58 ist eine Klinke 60 zugeordnet, die mit einem Kolben 62 verbunden ist; dieser ist in einem in Bezug auf den Träger 12 ortsfesten Zylinder 64 gegen den Widerstand einer Feder 66 verschiebbar, wenn auf seine in Fig. 1 bis 4 linke Seite ein Druckmittel, vorzugsweise Hydrauliköl, einwirkt, das von einer Pumpe 68 geliefert und über ein Ventil 70 und eine Leitung 72 dem Zylinder 64 zugeführt wird.

Zum Verschieben der Schablone 38 in Bezug auf den Abrichtschlitten 24 ist ein Zusatzantrieb 74 vorgesehen. Hierzu gehört ein an der Schablone 38 befestigter Gewindezapfen 76, der mit einer Gewindemutter 78 in Schraubeingriff steht. Die Gewindemutter 78 ist Bestandteil einer zusätzlichen Gewindespindel 80, die mit der beschriebenen Gewindespindel 44 durch eine Biegewelle 82 derart verbunden ist, dass beide Gewindespindeln sich stets gleichzeitig und um gleiche Beträge drehen. Die zusätzliche Gewindespindel 80 ist in einem Kolben 84 derart drehbar gelagert, dass sie sich nur gemeinsam mit diesem Kolben axial verschieben kann. Der Kolben 84 ist seinerseits in einem Zylinder 86 geführt, der am Abrichtschlitten 24 ausgebildet oder befestigt und oberhalb des Kolbens an die Leitung 72 angeschlossen ist. Zwischen dem Kolben 84 und dem Abrichtschlitten 24 ist eine Feder 88 eingespannt, die bestrebt ist, den Kolben nach oben zu drücken.

An der Unterseite des Trägers 12 ist eine Fotozellenanordnung 90 befestigt, die jeweils einen Impuls an ein Steuergerät 92 abgibt, wenn das Zahnrad 10 um eine Zahnteilung weitergeschaltet wird. Zum Steuergerät 92 gehört ein erster Impulszähler, der mittels eines Drehknopfes 94 auf eine bestimmte Zähnezahl einstellbar ist, nach deren Bearbeitung ein Abrichtvorgang stattfinden soll. Ferner gehört zum Steuergerät 92 ein mittels eines Drehknopfes 96 einstellbares Zeitrelais, das die Dauer jedes einzelnen Abrichtvorgangs bestimmt. Schliesslich gehört zum Steuergerät 92 ein mittels eines Drehknopfes 98 einstellbarer Signalgeber, der bestimmt, wieviel Abrichtzyklen bei einer Auslösung initialisiert werden sollen.

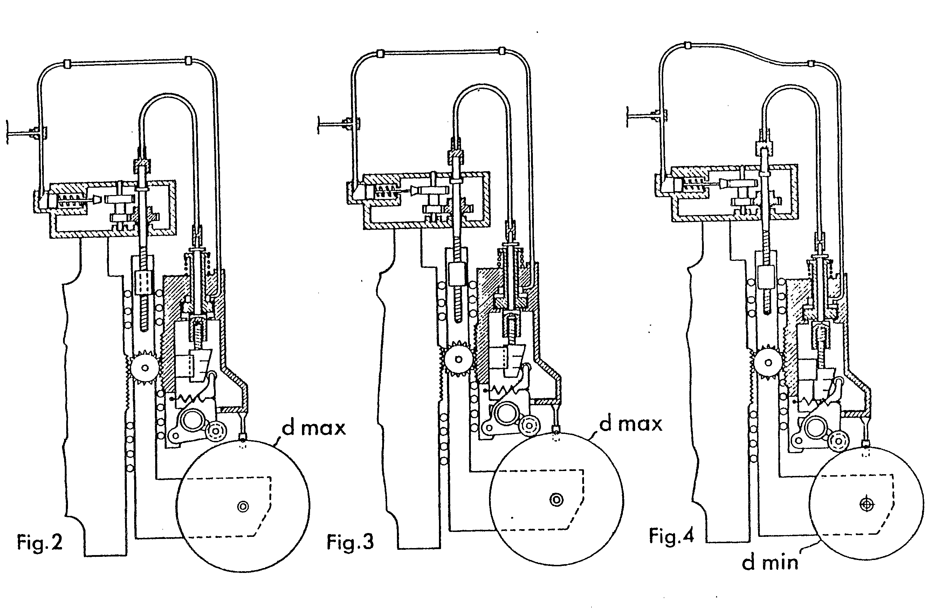

Sobald die Anzahl der von der Fotozellenanordnung 90 an das Steuergerät 92 abgegebenen Impulse der am Drehknopf 94 eingestellten Zahl entspricht, erhält das Ventil 70 einen Impuls, durch den es geöffnet wird. Dadurch gelangt Druckmittel über die Leitung 72 in die beiden Zylinder 64 und 86, so dass die beiden Kolben 62 und 84 gegen die Kraft der zugehörigen Feder 66 bzw. 88 verschoben werden. Die vom Kolben 62 angetriebene Klinke 60 dreht das Klinkenrad 58 um einen bestimmten Winkel, so dass die Gewindespindel 44 ebenfalls um einen bestimmten Winkel gedreht und dabei aus der Mutter 46 herausgeschraubt wird. Infolgedessen bewegt sich der Schleifsupport 16 um eine bestimmte Strecke nach unten, was wegen des Eingriffs des Ritzels 48 mit den Zahnstangen 50 und 52 die Folge hat, dass der Abrichtschlitten 24 um die doppelte Strecke abwärtsbewegt wird. Dabei nimmt der Abrichtschlitten 24 den Kolben 84 samt zusätzlicher Gewindespindel 80 nach unten mit. Gleichzeitig wird aber der Kolben 84 samt zusätzlicher Gewindespindel 80 durch das in den Zylinder 86 einströmende Druckmittel, wie erwähnt, in Bezug auf den Abrichtschlitten 24 abwärtsbewegt, so dass eine abwärtsgerichtete Relativbewegung der Schablone 38 in Bezug auf den Abrichtschlitten 24 stattfindet. Diese Relativbewegung hat zur Folge, dass die Schablone 38 den Werkzeugträger 26 aus seiner in Fig. 1 und 2 dargestellten Grundstellung in die Eingriffsstellung gemäss Fig. 3 schwenkt, in welcher das Abrichtwerkzeug 30 lose an der Mantelfläche der Schleifscheibe 20 angreift.

Der beschriebenen Relativbewegung der Schablone 38 in Bezug auf den Abrichtschlitten 24 überlagert sich eine weitere Relativbewegung, die dadurch erzeugt wird, dass die Biegewelle 82 die Drehung der Gewindespindel 44 auf die zusätzliche Gewindespindel 80 überträgt und diese derart dreht, dass die Gewindemutter 78 um einen bestimmten Winkel vom Gewindezapfen 76 abgeschraubt wird und dadurch die Schablone 38 zusätzlich nach unten drängt. Der Werkzeugträger 26 erhält infolgedessen eine zusätzliche Schwenkung im Uhrzeigersinn, so dass das Abrichtwerkzeug 30 um einen vorbestimmten Betrag in die Schleifscheibe 20 eindringt und diese abrichtet.

Nach Ablauf der eingestellten, mehr oder weniger kurzen Zeitspanne, während derer das Ventil 70 Druckmittel in die Zylinder 64 und 86 strömen lässt, unterbricht das Ventil 70 die Verbindung zwischen der Pumpe 68 und der Leitung 72 wieder und verbindet die Leitung 72 mit einem nicht dargestellten, drucklosen Vorratsbehälter, aus dem die Pumpe 68 das Druckmittel ansaugt. Die Entlastung der Zylinder 64 und 86 hat zur Folge, dass die Kolben 62 und 84 von den Federn 66 und 88 in ihre Ausgangsstellung zurückgedrängt werden. An der Drehwinkelstellung der Gewindespindeln 44 und 80 ändert sich dadurch nichts, jedoch nimmt der Kolben 84 die Gewindespindel 80 samt Schablone 38 nach oben mit, so dass der Werkzeugträger 26 wieder eine Grundstellung erreicht, in der das Abrichtwerkzeug 30 die Schleifscheibe 20 nicht berührt. Diese neue Grundstellung unterscheidet sich indessen von der ursprünglichen Grundstellung dadurch, dass das Abrichtwerkzeug 30 wie auch der Taster 40 um den Zustellbetrag des Werkzeugträgers 26 tiefer steht als zuvor und dass ausserdem das Abrichtwerkzeug 30 in Bezug auf den Abrichtschlitten 24 tiefer steht als in der ursprünglichen Grundstellung und zwar entsprechend dem Betrag, um den die Gewindespindel 80 gedreht, infolgedessen die Schablone 38 in Bezug auf den Abrichtschlitten 24 nach unten verschoben und dadurch der Werkzeugträger 26 geschwenkt worden ist. Rückgängig gemacht wird also nach jedem Abrichtzyklus nur diejenige Schwenkung des Werkzeugträgers 26, die durch die nach unten gerichtete Verschiebung des Kolbens 84 in Bezug auf den Zylinder 86 hervorgerufen worden war.

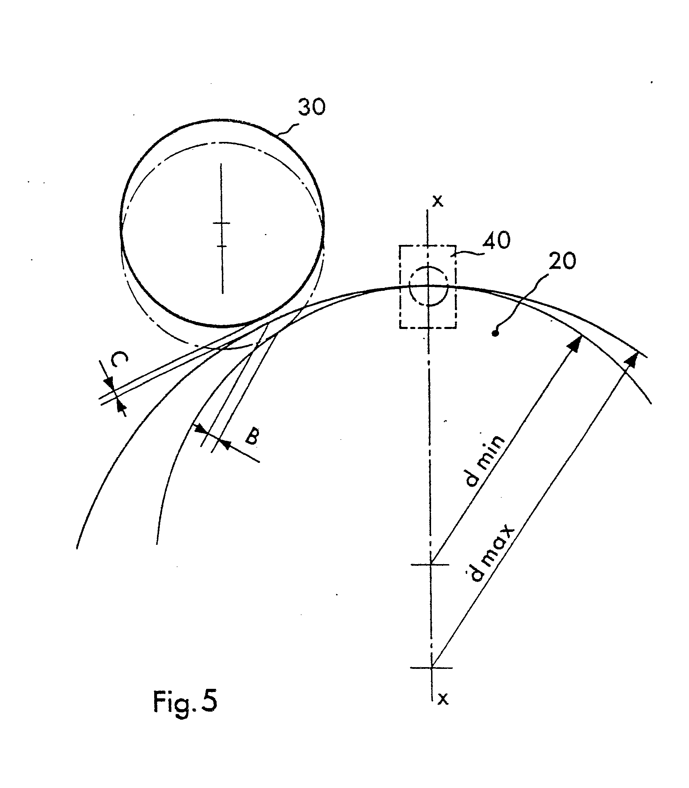

In Fig. 5 sind die geometrischen Beziehungen zwischen der Schleifscheibe 20, dem Abrichtwerkzeug 30 und dem Taster 40 skizziert. Dabei wird angenommen, dass sich die Schleifscheibe 20 von einem maximalen Durchmesser zu Beginn des Einsatzes an einer Zahnflankenschleifmaschine zu einem minimalen Durchmesser abnutzt. Bei ausserhalb der Schleifscheibenachse X : X sitzendem Abrichtwerkzeug 30 muss dieses bei maximaler Abnützung nicht etwa um den Betrag

$$\frac{d\ max - d\ min}{2}$$, sondern nur um den Betrag B + C verschoben werden.


## Patentansprüche

1. Abrichtgerät für eine tellerförmige Schleifscheibe (20) an einer Zahnflankenschleifmaschine, mit einem Abrichtschlitten (24), der mittels eines Radialantriebs (42) in Bezug auf die Schleifscheibe (20) radial zustellbar ist und ein Abrichtwerkzeug (30) zum Abrichten der Mantelfläche der Schleifscheibe (20) sowie einen Taster (40) zum Abtasten der arbeitenden Stirnfläche der Schleifscheibe (20) und zum Steuern von deren axialer Zustellung trägt, welcher Taster (40) sich beim Zustellen des Abrichtschlittens (24) stets radial zur Schleifscheibe (20) bewegt, dadurch gekennzeichnet, dass das Abrichtwerkzeug (30) in Bezug auf den Taster (40) in Umfangsrichtung der Schleifscheibe (20) versetzt auf einem Werkzeugträger (26) angeordnet ist, der am Abrichtschlitten (24) parallel zur arbeitenden Stirnfläche der Schleifscheibe (20) verstellbar angeordnet und von einem Zusatzantrieb (74) gesteuert ist, der mit dem Radialantrieb (42) verbunden ist.

2. Abrichtgerät nach Anspruch 1, dadurch gekennzeichnet, dass der Werkzeugträger (26) eine auf dem Abrichtschlitten (24) schwenkbar gelagerte Wippe ist.

3. Abrichtgerät nach Anspruch 1 oder 2, bei dem der Radialantrieb für den Abrichtschlitten eine Gewindespindel aufweist, dadurch gekennzeichnet, dass der Zusatzantrieb (74) eine am Abrichtschlitten (24) gelagerte zusätzliche Gewindespindel (80) aufweist, die mit der Gewindespindel (44) des Radialantriebs (42) gekuppelt ist.

4. Abrichtgerät nach Anspruch 3, dadurch gekennzeichnet, dass die zusätzliche Gewindespindel (80) mit der Gewindespindel (44) des Radialantriebs (42) über eine Biegewelle (82) gekuppelt ist.

5. Abrichtgerät nach Anspruch 3 oder 4, dadurch gekennzeichnet, dass die zusätzliche Gewindespindel (80) zu gemeinsamer Axialverschiebung mit einem Kolben (84) verbunden ist, der in einem am Abrichtschlitten (24) ausgebildeten Zylinder (86) in Längsrichtung der zusätzlichen Gewindespindel (80) verschiebbar angeordnet ist.

6. Abrichtgerät nach Anspruch 5, dadurch gekennzeichnet, dass die zusätzliche Gewindespindel (80) gemeinsam mit der Gewindespindel (44) des Radialantriebs (42) über eine Klinke (60) von einem Kolben (62) in einem Zylinder (64) antreibbar ist, der gemeinsam mit dem am Abrichtschlitten (24) ausgebildeten Zylinder (86) über ein Ventil (70) an eine Druckmittelquelle (68) angeschlossen ist.

7. Abrichtgerät nach einem der Ansprüche 3 bis 6, dadurch gekennzeichnet, dass die zusätzliche Gewindespindel (80) mit einer Schablone (38) in Eingriff steht, die am Abrichtschlitten (24) verschiebbar geführt ist und den Werkzeugträger (26) abstützt.

8. Abrichtgerät nach einem der Ansprüche 1 bis 7, bei dem der Abrichtschlitten an einem Schleifsupport geführt ist, der die Schleifscheibe trägt und seinerseits an einem Träger geführt ist, dadurch gekennzeichnet, dass am Schleifsupport (16) ein Ritzel (48) gelagert ist, das mit zwei einander gegenüberliegenden Zahnstangen (50, 52) in Eingriff steht, von denen die eine am Träger (12) und die andere am Abrichtschlitten (24) ausgebildet oder befestigt ist.


## Claims

1. Trueing device for a plate-shaped grinding wheel (20) on a tooth-flank grinding machine, with a trueing slide (24) which can be advanced radially in relation to the grinding wheel (20) by means of a radial drive (42) and which carries a trueing tool (30) for trueing the shell surface of the grinding wheel (20), as well as a tracer (40) for sensing the working end face of the grinding wheel (20) and for controlling its axial advance, which tracer (40) always moves radially to the grinding wheel (20) during the advance of the trueing slide (24), characterised in that the trueing tool (30) is arranged offset in relation to the tracer (40) in the peripheral direction of the grinding wheel (20), on a tool carrier (27) which is arranged on the trueing slide (24) so as to be adjustable parallel to the working end face of the grinding wheel (20) and which is controlled by an additional drive (74) connected to the radial drive (42).

2. Trueing device according to Claim 1, characterised in that the tool carrier (26) is a rocker mounted pivotably on the trueing slide (24).

3. Trueing device according to Claim 1 or 2, in which the radial drive for the trueing slide has a threaded spindle, characterised in that the additional drive (74) has an additional threaded spindle (80) which is mounted on the trueing slide (24) and which is coupled to the threaded spindle (44) of the radial drive (42).

4. Trueing device according to Claim 3, characterised in that the additional threaded spindle (80) is coupled to the threaded spindle (44) of the radial drive (42) via a flexible shaft (82).

5. Trueing device according to Claim 3 or 4, characterised in that the additional threaded spindle (80) is connected for common axial displacement to a piston (84) which is arranged to be displaceable in the longitudinal direction of the additional threaded spindle (80) in a cylinder (86) formed on the trueing slide (24).

6. Trueing device according to Claim 5, characterised in that the additional threaded spindle (80) can be driven, together with the threaded spindle (44) of the radial drive (42), via a pawl (60) by a piston (62) in a cylinder (64) which is connected, together with the cylinder (86) formed on the trueing slide (24), to a pressure-medium source (68) via a valve (70).

7. Trueing device according to one of Claims 3 to 6, characterised in that the additional threaded spindle (80) is engaged with a template (38) which is guided displaceably on the trueing slide (24) and which supports the tool carrier (26).

8. Trueing device according to one of Claims 1 to 7, in which the trueing slide is guided on a grinding support which carries the grinding wheel and which is itself guided on a carrier, characterised in that mounted on the grinding support (16) is a pinion (48) which engages with two racks (50, 52) which are located opposite one another, of which one is formed on or fastened to the carrier (12) and the other is formed on or fastened to the trueing slide (24).

## Revendications

1. Appareil de dressage pour une meule (20) en forme d'assiette, dans une meule à affûter à côtés dentés, comportant un chariot de dressage (24), qui est déplaçable radialement par rapport à la meule (20) au moyen d'un mécanisme d'entraînement radial (42), et qui porte un outil de dressage (30) pour dresser la surface de l'enveloppe de la meule (20) ainsi qu'un palpeur (40) pour palper la surface frontale de travail de la meule (20) et pour piloter la position axiale de cette dernière, ce palpeur (40) se déplaçant constamment radialement par rapport à la meule (20) durant le déplacement du chariot de dressage (24), caractérisé en ce que l'outil de dressage (30), décalé par rapport au palpeur (40) dans la direction périphérique de la meule (20), est disposé sur un support d'outil (27) monté de manière réglable sur le chariot de dressage (24) parallèlement à la surface frontale de travail de le meule (20), et est commandé par un mécanisme d'entraînement supplémentaire (74) relié au mécanisme d'entraînement radial (42).

2. Appareil de dressage selon la revendication 1, caractérisé en ce que le support d'outil (26) est une bascule montée pivotante sur le chariot de dressage (24).

3. Appareil de dressage selon l'une des revendications 1 et 2, dans lequel le mécanisme d'entraînement radial comporte une broche filetée pour le chariot de dressage, caractérisé en ce que le mécanisme d'entraînement supplémentaire (74) comprend une broche filetée supplémentaire (80) montée sur le chariot de dressage (24).

4. Appareil de dressage selon la revendication 3, caractérisé en ce que la broche filetée supplémentaire (80) est accouplée à la broche filetée (44) du mécanisme d'entraînement radial (42) par l'intermédiaire d'un arbre flexible (82).

5. Appareil de dressage selon l'une des revendications 3 et 4, caractérisé en ce que la broche filetée supplémentaire (80) est reliée à un piston (84) de façon que ces deux pièces puissent être déplacées axialement ensemble, et ce piston est disposé mobile dans la direction longitudinale de la broche filetée supplémentaire (80) dans un cylindre (86) agencé sur le chariot de dressage (24).

6. Appareil de dressage selon la revendication 5, caractérisé en ce que la broche filetée supplémentaire (80) peut être entraînée dans un cylindre (64) par un piston (62) en même temps que la broche filetée (44) du mécanisme d'entraînement radial (42), par l'intermédiaire d'un cliquet (60), le cylindre étant relié par une valve (70) à une source (68) d'un moyen de pression, ainsi que le cylindre (86) agencé sur le chariot de dressage (24).

7. Appareil de dressage selon l'une des revendications 3 à 6, caractérisé en ce que la broche filetée supplémentaire (80) est en prise avec un gabarit (38), mobile et guidé sur le chariot de dressage (24) et qui étançonne le support d'outil (26).

8. Appareil de dressage selon l'une des revendications 1 à 7, dans lequel le chariot de dressage est guidé sur un support de meulage, qui supporte la meule et est de son côté guidé sur un organe de support, caractérisé en ce qu'un pignon (48) est monté sur le support de meulage (16), et ce pignon est en prise avec deux tiges dentées (50, 52) disposées à l'opposé l'une de l'autre, l'une d'elles étant agencée ou fixée sur l'organe de support (12) et l'autre agencée ou fixée sur le chariot de dressage (24).

**Fig.1**

d min

Fig.4

d max

Fig.3

d max

Fig.2

Fig. 5